# EUROPÄISCHE PATENTSCHRIFT

(11) **EP 2 345 570 B1**
(45) Veröffentlichungstag und Bekanntmachung des Hinweises auf die Patenterteilung: **20.06.2012**
(21) Anmeldenummer: 10015792.4
(22) Anmeldetag: 17.12.2010
(51) Int. Cl.: B62D 7/02, E01C 19/28

(54) **Wartungsfreie Lenkschemellagerung einer Baumaschine**
Maintenance-free steering guide bearing of a construction machine
Palier de levier de liaison sans entretien d'un engin

(30) Priorität: 18.01.2010 DE 202010001060 U
(43) Veröffentlichungstag der Anmeldung: 20.07.2011
(73) Patentinhaber: BOMAG GmbH, 56154 Boppard (DE)
(72) Erfinder: Wagner, Jens, 56154 Boppard (DE)
(74) Vertreter: Lang, Friedrich

(56) Entgegenhaltungen:
- US-A- 2 526 155
- US-A- 3 868 194

## Beschreibung

Die Erfindung betrifft eine Lageranordnung für einen Lenkschemel einer Baumaschine, insbesondere einer Vibrationswalze, wobei der Lenkschemel gegenüber einem Rahmen der Baumaschine um eine vertikale Drehachse drehbar ausgebildet ist. Die Lageranordnung umfasst einen Drehzapfen, welcher mit dem Lenkschemel drehfest verbunden ist. Sie umfasst ferner ein Aufnahmemittel mit einer durchgehenden Aufnahmebohrung, welches mit dem Rahmen der Baumaschine drehfest verbunden ist.

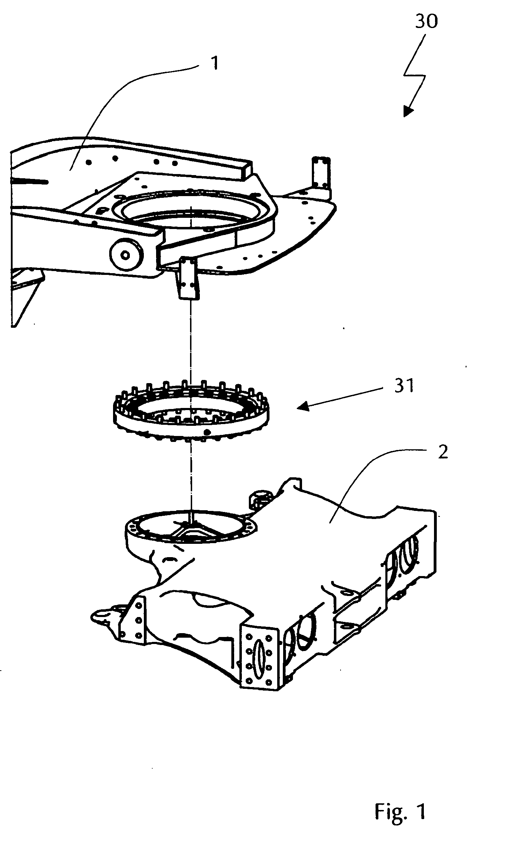

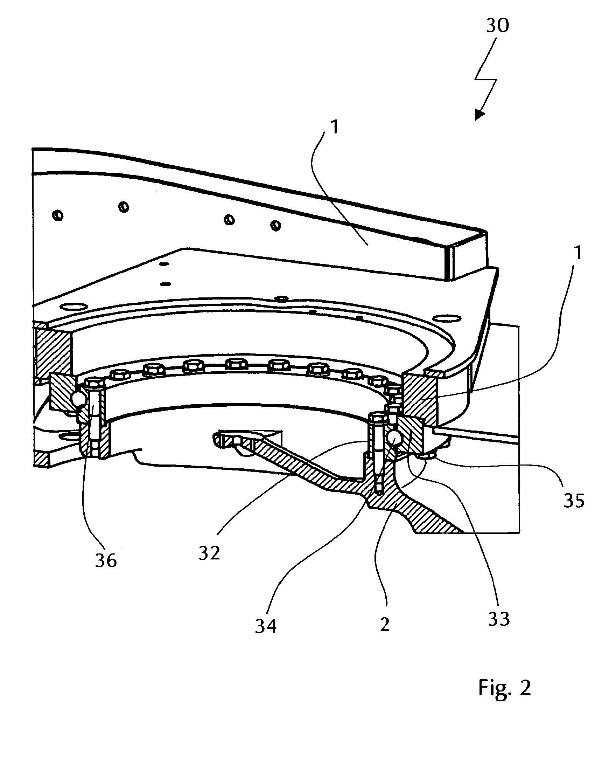

Eine bekannte Lageranordnung für eine nach dem Prinzip der Drehschemellenkung gelenkte Baumaschine ist in Figuren 1 und 2 dargestellt. Herkömmlich wird der Lenkschemel, welcher eine Lenkachse mit beispielsweise Rädern oder Bandagen trägt, mittels einer Drehverbindung mit dem Rahmen einer Baumaschine verbunden. Die Drehverbindung besteht gewöhnlich aus einem Radiallager, welches einen Innenring, welcher über Schrauben mit dem Lenkschemel verbunden ist, einen Außenring, welcher über Schrauben mit dem Rahmen verbunden ist, sowie kugel- oder zylinderförmige Wälzkörper aufweist.
Weiter zeigt Dokument US 3868194 A die Präambel des Anspruchs 1.

Nachteilig bei dem bekannten Stand der Technik ist, dass eine solche Drehverbindung kostenintensiv und aufwendig ist. Zudem ist sie empfindlich gegenüber äußeren Einflüssen, wie beispielsweise Schmutz oder Schläge, so dass ein Einsatz auf rauen Baustellen mit vielen Bodenunebenheiten und Hindernissen nicht zu empfehlen ist. Des weiteren besteht der Nachteil darin, dass sie wartungspflichtig ist, d. h. beispielsweise mit Schmiermittel versorgt werden muss, was wiederum eine aufwendige Konstruktion und entsprechend hohe Kosten bei der Herstellung und beim Betrieb der Baumaschine verursacht.

Der Erfindung liegt daher die Aufgabe zugrunde, eine Lageranordnung anzugeben, welche die vorstehend genannten Nachteile im Stand der Technik überwindet, d. h. einfach, kostengünstig, robust und wartungsfrei ist.

Dei Aufgabe der Erfindung wird gelöst durch den Gegenstand des unabhängigen Anspruchs. Abhängige Ansprüche sind auf vorteilhafte Ausführungsformen der Erfindung gerichtet.

Die erfindungsgemäße Lageranordnung umfasst zwei Gleitlagerbuchsen, welche zwischen dem Drehzapfen und der Aufnahmebohrung angeordnet sind, wobei die Gleitlagerbuchsen einen Abstand zueinander in axialer Richtung aufweisen.

Gleitlager sind gegenüber Wälzlager wesentlich robuster und unempfindlicher gegenüber Stößen oder Schmutz. Sie sind platzsparend und einfach im Aufbau und damit deutlich günstiger als Wälzlager. Durch geeignete Wahl von verwendetem Lagerwerkstoff kann sogar auf eine Schmierung mit Öl oder Fett verzichtet werden, so dass damit eine wartungsfreie Lageranordnung ermöglicht wird. Des weiteren sind Gleitlager im Vergleich zu Wälzlagern geräuschärmer und weisen zudem bessere Dämpfungseigenschaften auf.

Erfindungsgemäß werden Gleitlagerbuchsen verwendet, welche zwischen dem Drehzapfen und der Aufnahmebohrung angeordnet werden. Anstelle der direkten Gleitpaarung Drehzapfen/Aufnahmebohrung werden Gleitlagerbuchsen dazwischengeschaltet. Gleitlagerbuchsen sind relativ dünnwandig und nehmen kaum Bauraum ein. Sie weisen ferner hervorragende Gleiteigenschaften auf, was zweckmäßigerweise auch ohne Wartung, beispielsweise Schmierung, erreicht werden kann. Ein weiterer Vorteil der Verwendung von Gleitlagerbuchsen anstelle der direkten Paarung Drehzapfen/Aufnahmebohrung ist die Möglichkeit der leichten Austauschbarkeit von Lagerbuchsen, falls dies erforderlich sein sollte. Dank der zweiteiligen Ausführung der Gleitlagerbuchse bzw. dank der Verwendung von zwei voneinander beabstandet angeordneten Gleitlagerbuchsen, die vorzugsweise identisch sind, können sie die während der Fahrt auftretenden Momente aufnehmen. Mit dem "Abstand in axialer Richtung" ist der Abstand in Richtung der Längsmittelachsen der Gleitlagerbuchsen gemeint, wobei die Längsmittelachsen der Gleitlagerbuchsen und die vertikale Drehachse der Lenkung aufeinander fallen.

Gemäß einer vorteilhaften Ausführungsform der Erfindung sind die Gleitlagerbuchsen Bundbuchsen, welche einander gegenüberliegend in die Aufnahmebohrung einführbar sind.

Eine Bundbuchse besteht aus einem zylindrischen Teil und einem Bund, welcher sich an einer Stirnseite des zylindrischen Teils flanschartig radial nach außen erstreckt. Der Vorteil besteht darin, dass sowohl auf der ringförmigen Oberfläche des Bundes als auch auf der zylindrischen Oberfläche des zylindrischen Teils Gleitflächen aus geeigneten Gleitlagerwerkstoffen ausgebildet sein können. Somit kann neben einem radialen Gleiten, also einer Gleitbewegung zwischen dem Drehzapfen und dem zylindrischen Teil der Gleitlagerbuchse, auch ein axiales Gleiten, also einer Gleitbewegung zwischen dem Bund der Gleitlagerbuchse und einer axial benachbarten Komponente, beispielsweise Anlaufscheibe, stattfinden. Damit können Reibungsverluste bei einer Lenkbewegung weiter reduziert werden. Die Bundbuchsen werden jeweils in eine der beiden Öffnungen der durchgehenden Aufnahmebohrung eingeführt. Der Durchmesser der Bohrung entspricht im Wesentlichen dem Außendurchmesser des zylindrischen Teils der Bundbuchse, wobei eine geeignete Passung (Spiel-, Übergangs- oder Presspassung) je nach Anwendung auszuwählen ist, so dass die Bundbuchsen nach der Einführung in die Aufnahmebohrung am Bund der Bundbuchse zum Anschlag kommen. Damit sind die Gleitlagerbuchsen axial fixiert. Mit der Wahl der axialen Länge des zylindrischen Teils der Bundbuchse ist eine Einstellung des axialen Abstands der beiden Bundbuchsen möglich.

Eine weitere vorteilhafte Weiterbildung der Erfindung sieht vor, dass die Gleitlagerbuchsen zur vollständigen Überdeckung der Oberfläche der Aufnahmebohrung bis auf einen durch den Abstand zwischen den Gleitlagerbuchsen gebildeten, ringförmigen Bereich ausgebildet sind.

Der ringförmige Bereich in der Aufnahmebohrung, welcher nicht von den beiden zylindrischen Teilen der Gleitlagerbuchsen überdeckt wird, kann relativ klein gehalten werden, um die Gleitoberfläche möglichst groß auszuführen.

Gemäß einer weiteren bevorzugten Ausführungsform der Erfindung ist der Drehzapfen als Hohlwelle ausgebildet, wobei eine Sicherungsscheibe und ein zentrales Befestigungselement, welches durch die Sicherungsscheibe und die Hohlwelle axial hindurchgeführt ist, zur Sicherung der Hohlwelle gegen Herausfallen aus der Aufnahmebohrung vorgesehen sind.

Anstelle eines massiven Drehzapfens aus Vollmaterial ist erfindungsgemäß eine Hohlwelle als Drehzapfen vorgesehen. Dadurch können Kosten und Gewicht der Maschine reduziert werden, ohne dass die Lenkfähigkeit der Maschine beeinträchtigt wäre. Zur Sicherung der Hohlwelle gegen Herausfallen aus der Aufnahmebohrung, beispielsweise beim Anheben der Baumaschine, ist eine Sicherungsscheibe vorgesehen, dessen Durchmesser größer ist als der Durchmesser der Aufnahmebohrung. Mittig und axial durch diese Sicherungsscheibe und durch die Hohlwelle wird der Schaft eines lösbaren zentralen Befestigungsmittels, beispielsweise einer Schraube, hindurchgeführt, welcher kraft- und/oder formschlüssig mit dem Lenkschemel verbunden wird. Im Vergleich zum Stand der Technik mit den zahlreichen Schrauben 35 und 36 (Fig. 2), welche zur Befestigung der Drehverbindung 31 mit dem Rahmen 1 bzw. dem Lenkschemel 2 dienen, ist erfindungsgemäß nur ein einziges zentrales Befestigungsmittel ausreichend, um eine sichere Kopplung des Lenkschemels am Rahmen vorzunehmen. Somit werden weitere Kosten und Montageaufwand eingespart.

In einer weiteren vorteilhaften Ausführungsform der Erfindung weist die Lageranordnung eine Anlaufscheibe auf, welche im Kontaktbereich zwischen der Gleitlagerbuchse und der Sicherungsscheibe angeordnet ist.

Eine Anlaufscheibe im Kontaktbereich zwischen der Gleitlagerbuchse und der Sicherungsscheibe, d. h. zwischen dem Bund der Bundbuchse und der Sicherungsscheibe, falls eine Bundbuchse zum Einsatz kommt, oder zwischen dem vertikal oberen Umrandungsbereich der Aufnahmebohrung und der Sicherungsscheibe, falls eine zylindrische Gleitlagerbuchse verwendet wird, ist dazu vorgesehen, die Axialkräfte, beispielsweise das Maschinengewicht im Normalbetrieb oder das Gewicht des Lenkschemels mit den daran befestigten Komponenten beim Anheben der Maschine, aufzunehmen.

Gemäß einer weiteren vorteilhaften Ausführungsform der Erfindung sind der Drehzapfen und die Aufnahmebohrung in axialer Richtung konisch verjüngend ausgebildet.

Gemäß eine weiteren vorteilhaften Ausführungsform der Erfindung sind zudem auch die Gleitlagerbuchsen in axialer Richtung konisch verjüngend ausgebildet.

Mit Hilfe einer leicht konischen Ausbildung des Drehzapfens und der Aufnahmebohrung in axialer Richtung (bzw. in Richtung der vertikalen Drehachse) wird das radiale Spiel herausgenommen. "Konisch verjüngen" bedeutet in diesem Zusammenhang, dass der Bohrungsdurchmesser und der radiale Außendurchmesser des Drehzapfens in axialer Richtung, vorzugweise vom vertikal oberen Bereich zum vertikal unteren Bereich hin, kontinuierlich abnimmt, so dass eine kegelstumpfartige Form entsteht. Die Gleitlagerbuchsen können entsprechend ebenfalls leicht konisch in axialer Richtung verjüngen.

Ferner ist es gemäß einer weiteren Ausführungsform vorteilhaft, dass die Lageranordnung ein elastisches Formelement, beispielsweise Federpaket, zur Erzeugung einer Kraft in Richtung der Drehachse umfasst.

Mit Hilfe des elastischen Formelements zur Erzeugung einer Kraft in Richtung der Drehachse kann das Axialspiel reduziert werden.

Die Erfindung betrifft ferner eine Vibrationswalze mit einer erfindungsgemäßen Lageranordnung gemäß einem der vorhergehenden Ansprüche. Ein häufiger Anwendungsfall einer Baumaschine mit Drehschemellagerung ist eine Vibrationswalze mit vorzugsweise zwei unabhängig voneinander lenkbaren Lenkschemeln mit jeweils einer Bandage. Dadurch ist ein sogenannter "Hundegang" möglich.

Nachfolgend wird die Erfindung anhand von Figuren weiter erläutert. Es zeigen schematisch:
- Figur 1: eine Explosionsansicht einer herkömmlichen Lageranordnung;
- Figur 2: eine Schnittansicht der herkömmlichen Lageranordnung aus Fig. 1;
- Figur 3: eine Explosionsansicht eines Ausführungsbeispiels der erfindungsgemäßen Lageranord- nung;
- Figur 4: eine Schnittansicht des Ausführungsbeispiels aus Fig. 3.

Figuren 1 und 2 zeigen eine herkömmliche Lageranordnung 30 mit einer Drehverbindung 31, wie auch eingangs erläutert worden ist.

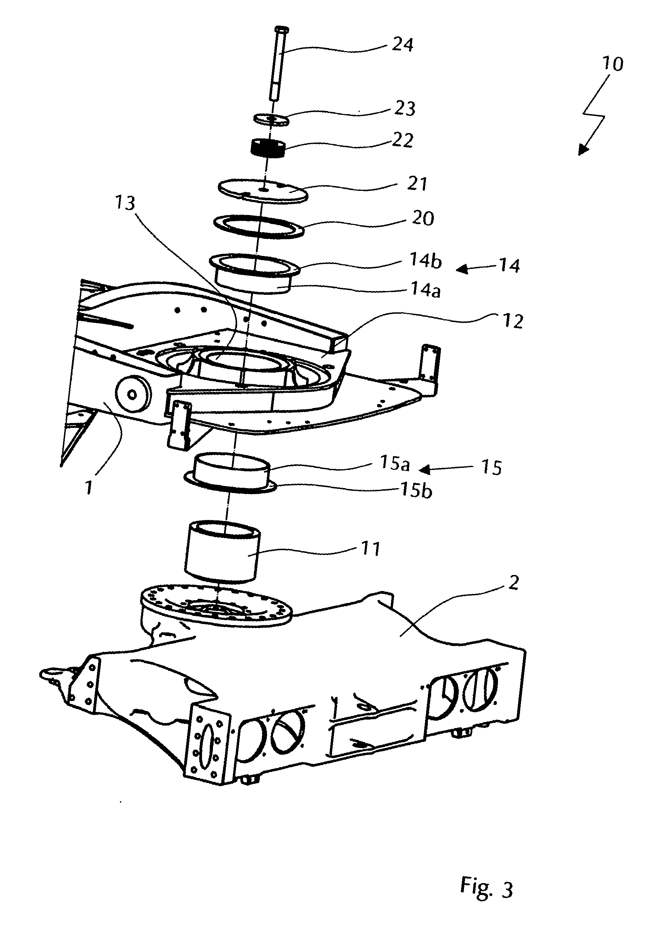

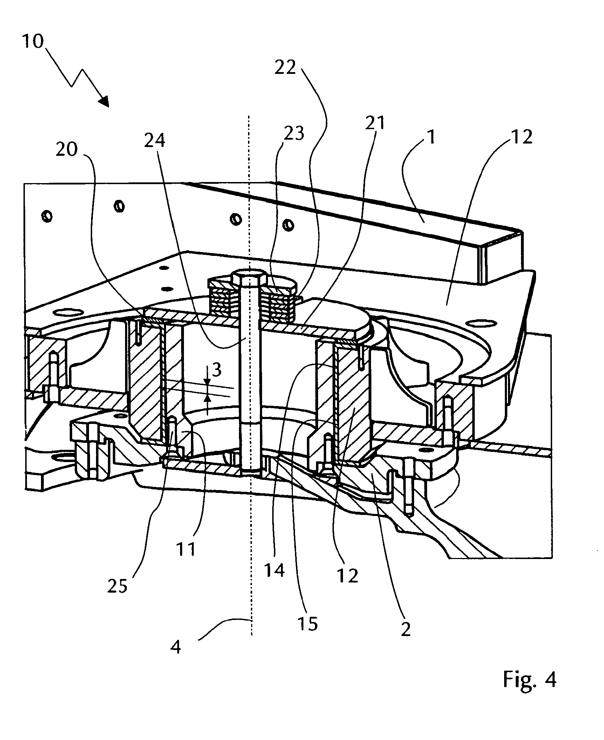

Figuren 3 und 4 zeigen ein Ausführungsbeispiel der erfindungsgemäßen Lageranordnung 10 zur Lagerung des Lenkschemels 2 am Rahmen 1 einer Baumaschine, nämlich einer Vibrationswalze (nicht dargestellt). Zweck der Lagerung ist die Ermöglichung einer Drehbewegung des Lenkschemels 2 gegenüber dem Rahmen 1 um eine vertikale Lenkachse 4.

Der als Hohlwelle ausgebildete Drehzapfen 11 der erfindungsgemäßen Lageranordnung 10 ist über Schrauben 25 (Fig. 4) mit dem Lenkschemel 2 der Vibrationswalze drehfest verbunden. Der Lenkschemel 2 trägt eine der Bandagen (nicht dargestellt) zur Bodenverdichtung. Zur Aufnahme des Drehzapfens 11 ist ein Aufnahmemittel 12 mit einer durchgehenden Aufnahmebohrung 13 (Fig. 3) vorgesehen, welches seinerseits mit dem Rahmen 1 der Vibrationswalze drehfest verbunden ist.

Eine obere Gleitlagerbuchse 14 mit einem oberen zylindrischen Teil 14a und einem oberen Bund 14b sowie eine untere Gleitlagerbuchse 15 mit einem unteren zylindrischen Teil 15a und einem unteren Bund 15b werden jeweils in die obere bzw. untere Öffnung der Aufnahmebohrung 13 eingeführt. Im vorliegenden Beispiel sind die Gleitlagerbuchsen 14, 15 als zwei gleiche, allerdings entgegengerichtet angeordnete Bundbuchsen ausgeführt. Es ist auch möglich, je nach Anwendungsfall zwei verschieden dimensionierte mit beispielsweise unterschiedlichen Längen zu verwenden. Als bevorzugte Werkstoffe für eine Gleitlagerbuchse kommen Bronze, Weißmetalle, Bleilagermetalle, Aluminiumlegierungen, Keramikwerkstoffe, Verbundwerkstoffe sowie verschiedene Legierungen, die speziell für geringe Reibungskoeffizienten entwickelt wurden, in Frage. Der Außen- bzw. Innendurchmesser und die Wandstärke der zylindrischen Teile 14a, 15a sind so gewählt, dass die äußeren Mantelflächen der zylindrischen Teile 14a, 15a nach dem Zusammenbau der Lageranordnung 10 an der zylindrischen Oberfläche der Aufnahmebohrung 13 und die inneren Mantelflächen der zylindrischen Teile 14a, 15a an der äußeren Mantelfläche des Drehzapfens 11 im Wesentlichen anliegen. Über die Wahl der axialen Längen der zylindrischen Teile 14a, 15a kann der Abstand 3 der Gleitlagerbuchsen 14, 15 zueinander in axialer Richtung eingestellt werden. Die Verwendung von zwei voneinander beabstandeten Gleitlagerbuchsen 14, 15 ermöglicht die Aufnahme von Momenten, die während der Fahrt auftreten können. Die innere Mantelfläche der zylindrischen Teile 14a, 15a sowie die axial den zylindrischen Teilen 14a, 15a abgewandte Oberfläche der Bünde 14b, 15b sind vorzugsweise mit einer die Gleitbewegung fördernden Beschichtung versehen, so dass keine separate Schmierung mit Öl oder Fett erforderlich ist.

Eine Anlaufscheibe 20, welche im Kontaktbereich zwischen dem oberen Bund 14b der oberen Gleitlagerbuchse 14 und einer Sicherheitsscheibe 21 angeordnet ist, kann die axialen Kräfte, wie beispielsweise das Maschinengewicht im Normalbetrieb oder das Bandagengewicht beim Anheben der Maschine, aufnehmen. Vorzugsweise entsprechen die Form und Größe der Oberfläche der Anlaufscheibe 20 der Form und Größe der mit ihr im Kontakt stehenden Oberfläche des oberen Bundes 14b.

Eine Sicherheitsscheibe 21, deren Durchmesser im Wesentlichen dem Außendurchmesser der Anlaufscheibe 20 bzw. dem Außendurchmesser des Bundes 14b entspricht, sorgt zusammen mit dem zentralen Befestigungsmittel 24 dafür, dass der Drehzapfen 11 mitsamt dem Lenkschemel 2 und der Bandage beim Anheben der Vibrationswalze nicht aus dem Rahmen herausfallen kann. Sollte aus Wartungsgründen die Entkopplung des Lenkschemels 2 vom Rahmen 1 erforderlich sein, kann das zentrale Befestigungsmittel 24, dessen Schaftende mit dem Lenkschemel 2 kraft- und/oder formschlüssig verbunden ist, einfach gelöst werden. Im Vergleich zu herkömmlichen Lösungen ist der Montageaufwand damit sehr gering.

Ein elastisches Formelement 22, hier ein Federpaket, wird axial zwischen der Sicherungsscheibe 21 und einer Unterlegscheibe 23 angeordnet, um eine axiale Kraft, also eine Kraft in Richtung der Lenkachse 4, auszuüben. Somit wird das Axialspiel zwischen den Komponenten verringert.

Zur Verringerung des Radialspiels sind in einem hier nicht gezeigten Ausführungsbeispiel der Drehzapfen 11 sowie die Aufnahmebohrung 13 in axialer Richtung konisch verjüngend ausgebildet. Die Verjüngung, d. h. die Abnahme des radialen Durchmessers erfolgt vorzugsweise von oben nach unten, d. h. vom oberen Ende der Aufnahmebohrung 13 hin zum Lenkschemel 2.

Die erfindungsgemäße Lageranordnung ermöglicht insgesamt eine robuste, konstruktiv einfache und kostengünstige Lagerung eines Lenkschemels einer Baumaschine, welche ohne Wartung auskommt.

## Patentansprüche

1. Lageranordnung (10) für einen Lenkschemel (2) einer Baumaschine, insbesondere einer Vibrationswalze, wobei der Lenkschemel (2) gegenüber einem Rahmen (1) der Baumaschine um eine vertikale Drehachse (4) drehbar ausgebildet ist, umfassend:
einen Drehzapfen (11), welcher mit dem Lenkschemel (2) drehfest verbunden ist, und
ein Aufnahmemittel (12) mit einer durchgehenden Aufnahmebohrung (13), welches mit dem Rahmen (1) drehfest verbunden ist,
wobei,
zwei Gleitlagerbuchsen (14, 15) zwischen dem Drehzapfen (11) und der Aufnahmebohrung (13) angeordnet sind, wobei die Gleitlagerbuchsen (14, 15) einen Abstand (3) zueinander in axialer Richtung aufweisen,
**dadurch gekennzeichnet,**
**dass** der Drehzapfen (11) als Hohlwelle ausgebildet ist, wobei eine Sicherungsscheibe (21) und ein zentrales Befestigungselement (24), welches durch die Sicherungsscheibe (21) und durch die Hohlwelle (11) axial hindurchgeführt ist, zur Sicherung der Hohlwelle (11) gegen Herausfallen aus der Aufnahmebohrung (13) vorgesehen sind.

2. Lageranordnung (10) nach Anspruch 1,
**dadurch gekennzeichnet,**
**dass** die Gleitlagerbuchsen (14, 15) Bundbuchsen sind, welche einander gegenüberliegend in die Aufnahmebohrung (13) einführbar sind.

3. Lageranordnung (10) nach einem der vorhergehenden Ansprüche,
**dadurch gekennzeichnet,**
**dass** die Gleitlagerbuchsen (14, 15) zur vollständigen Überdeckung der Oberfläche der Aufnahmebohrung (13) bis auf einen durch den Abstand (3) zwischen den Gleitlagerbuchsen (14, 15) gebildeten, ringförmigen Bereich ausgebildet sind.

4. Lageranordnung (10) nach Anspruch 1,
**dadurch gekennzeichnet,**
**dass** sie eine Anlaufscheibe (20) aufweist, welche im Kontaktbereich zwischen der Gleitlagerbuchse (14) und der Sicherungsscheibe (21) angeordnet ist.

5. Lageranordnung (10) nach einem der vorhergehenden Ansprüche,
**dadurch gekennzeichnet,**
**dass** der Drehzapfen (11) und die Aufnahmebohrung (13) in axialer Richtung konisch verjüngend ausgebildet sind.

6. Lageranordnung (10) nach Anspruch 5,
**dadurch gekennzeichnet,**
**dass** die Gleitlagerbuchsen (14, 15) in axialer Richtung konisch verjüngend ausgebildet sind.

7. Lageranordnung (10) nach einem der vorhergehenden Ansprüche,
**dadurch gekennzeichnet,**
**dass** sie ein elastisches Formelement (22), beispielsweise Federpaket, zur Erzeugung einer Kraft in Richtung der Drehachse (4) umfasst.

8. Vibrationswalze mit einer Lageranordnung (10) gemäß einem der vorhergehenden Ansprüche.

## Claims

1. A bearing arrangement (10) for a fifth wheel hitch (2) of a construction machine, especially a vibrating roller, with the fifth wheel hitch (2) being arranged to be rotatable about a vertical rotational axis (4) with respect to a frame (1) of the construction machine, comprising:
a pivot pin (11) which is connected with the fifth wheel hitch (2) in torsion-proof manner, and a receiving means (12) with a continuous receiving borehole (13) which is connected with the frame (1) in a torsion-proof manner, with two plain bearing bushes (14, 15) being arranged between the pivot pin (11) and the receiving borehole (13), with the plain bearing bushes (14, 15) having a distance (3) from one another in the axial direction, **characterized in that** the pivot pin (11) is arranged as a hollow shaft, with a securing disk (21) and a central fastening element (24) which is axially guided through the securing disk (21) and through the hollow shaft (11) being provided for securing the hollow shaft against dropping out of the receiving borehole (13).

2. A bearing arrangement (10) according to claim 1, **characterized in that** the plain bearing bushes (14, 15) are flanged bushings which are insertable into the receiving borehole (13) while disposed opposite of one another.

3. A bearing arrangement (10) according to one of the preceding claims, **characterized in that** for the purpose of completely covering the surface of the receiving borehole (13) the plain bearing bushes (14, 15) are arranged up to an annular area formed by the distance (3) between the plain bearing bushes (14, 15).

4. A bearing arrangement (10) according to claim 1, **characterized in that** it comprises a wearing disk (20) which is arranged in the contact area between the plain bearing bush (14) and the securing disk (21).

5. A bearing arrangement (10) according to one of the preceding claims, **characterized in that** the pivot pin (11) and the receiving borehole (13) are arranged in a conically tapering manner in the axial direction.

6. A bearing arrangement (10) according to claim 5, **characterized in that** the plain bearing bushes (14, 15) are arranged in a conically tapering manner in the axial direction.

7. A bearing arrangement (10) according to one of the preceding claims, **characterized in that** it comprises an elastic form element (22), e.g. a spring assembly, for generating a force in the direction of the rotational axis (4).

8. A vibration roller with a bearing arrangement (10) according to one of the preceding claims.

## Revendications

1. Dispositif de palier (10) pour une crapaudine orientable (2) d'un engin de chantier, en particulier d'un rouleau vibrant, dans lequel la crapaudine orientable (2) est construite avec possibilité de rotation par rapport à un châssis (1) de l'engin de chantier autour d'un axe de rotation (4) vertical, comprenant:
un tourillon (11) qui est relié à la crapaudine orientable (2) de manière solidaire en rotation et
un moyen formant logement (12) avec un trou traversant de logement (13), qui est relié au châssis (1) de manière solidaire en rotation,
dans lequel deux coussinets lisses (14, 15) sont disposés entre le tourillon (11) et le trou de logement (13), lesquels coussinets lisses (14, 15) présentent un écartement (3) entre eux dans le sens axial,
**caractérisé en ce que** le tourillon (11) est conçu comme un arbre creux, une rondelle de sûreté (21) et un élément de fixation (24) central, passant à travers la rondelle de sûreté (21) et à travers l'arbre creux (11) dans le sens axial, étant prévus pour empêcher l'arbre creux (11) de tomber du trou de logement (13).

2. Dispositif de palier (10) selon la revendication 1, **caractérisé en ce que** les coussinets lisses (14, 15) sont des douilles à collet qui peuvent être insérées dans le trou de logement (13) en se faisant face.

3. Dispositif de palier (10) selon l'une des revendications précédentes, **caractérisé en ce que** les coussinets lisses (14, 15) sont conçus pour recouvrir complètement la surface du trou de logement (13) à l'exception d'une zone annulaire formée par l'écartement (3) entre les coussinets lisses (14, 15).

4. Dispositif de palier (10) selon la revendication 1, **caractérisé en ce qu'**il possède une rondelle d'approche (20) qui est disposée dans la zone de contact entre le coussinet lisse (14) et la rondelle de sûreté (21).

5. Dispositif de palier (10) selon l'une des revendications précédentes, **caractérisé en ce que** le tourillon (11) et le trou de logement (13) se resserrent en cône dans le sens axial.

6. Dispositif de palier (10) selon la revendication 5, **caractérisé en ce que** les coussinets lisses (14, 15) se resserrent en cône dans le sens axial.

7. Dispositif de palier (10) selon l'une des revendications précédentes, **caractérisé en ce qu'**il comprend un élément élastique mis en forme (22), par exemple un paquet de ressorts, destiné à produire une force dans la direction de l'axe de rotation (4).

8. Rouleau vibrant muni d'un dispositif de palier (10) selon l'une des revendications précédentes.
